# EUROPÄISCHE PATENTSCHRIFT

(11) **EP 2 539 849 B1**
(45) Veröffentlichungstag und Bekanntmachung des Hinweises auf die Patenterteilung: **03.02.2016**
(21) Anmeldenummer: 11702195.6
(22) Anmeldetag: 03.02.2011
(51) Int. Cl.: G06K 7/10, G03B 7/00, A47J 31/00

(54) **BARCODELESER**
BAR CODE READER
LECTEUR DE CODE A BARRE

(30) Priorität: 26.02.2010 DE 102010002439
(43) Veröffentlichungstag der Anmeldung: 02.01.2013
(73) Patentinhaber: BSH Hausgeräte GmbH, 81739 München (DE)
(72) Erfinder: DABURGER, Josef, 83313 Siegsdorf-Hammer (DE); SCHULZE, Michael, 81925 München (DE)
(86) Internationale Anmeldenummer: PCT/EP2011/051534
(87) Internationale Veröffentlichungsnummer: WO 2011/104095

(56) Entgegenhaltungen:
- DE-U1-202008 015 525
- US-A- 5 521 366
- US-A1- 2002 070 278
- US-A1- 2005 001 035
- US-A1- 2006 163 355
- US-A1- 2007 164 115
- US-A1- 2010 181 378
- US-B2- 7 461 790

## Beschreibung

Die Erfindung betrifft ein Getränkegerät für Haushaltszwecke mit einer Codeleseeinrichtung, die zum Lesen eines optisch lesbaren Codes ausgebildet ist, mit einer Sensorstufe zum optoelektronischen Erfassen einer Abbildung des Codes während einer Belichtungsdauer, mit einer Belichtungssteuerstufe zum Festlegen des Werts der Belichtungsdauer für die Sensorstufe, und mit einer Strichcodeerkennungsstufe, die dazu ausgebildet ist zu prüfen, ob der erfasste Code erkannt wird. Die Erfindung betrifft außerdem ein Verfahren zum Lesen eines optisch lesbaren Codes, wobei ein Wert einer Belichtungsdauer festgelegt wird und der Code während der Belichtungsdauer opto-elektronisch erfasst wird.

Ein optisch lesbarer Code kann grundsätzlich jede beliebige visuell wahrnehmbare Codierung einer Information bzw. opto-elektronisch lesbare "Schrift" sein. Aus Standardisierungsgründen wird zumeist ein Strichcode, Balkencode oder Barcode gewählt. Neben eindimensionalen gibt es auch mehrdimensionale Codes. Im Folgenden wird jedoch von einem Strich- oder Barcode ausgegangen.

Der Strichcode kann beispielsweise eine automatische Erkennung einer dem Getränkegerät zugeführten Kapsel bzw. des in ihr enthaltenen Brühgutes ermöglichen. Nach dem Erkennen des Strichcodes kann das Getränkegerät daraufhin einen jeweils geeignetes Zubereitungsprogramm auswählen und anwenden, um ein optimales Getränk zu erzielen.

Die DE 20 2008 015 525 U1 offenbart ein elektrisches Haushaltsgerät mit einer Steuereinheit und einem Programmspeicher, in dem unterschiedliche Funktionsschemata gespeichert sind. Das Gerät weist eine Erkennungseinheit auf, die mit der Steuereinheil kommuniziert. Außerdem ist ein separat handhabbares Teil mit einer Codierung vorgesehen, die einem der Funktionsschemata entspricht und die von der Erkennungseinheit erfassbar ist, sobald das separat handhabbare Teil dieser angenähert wird. Die Erkennungseinheit übermittelt daraufhin ein Signal an die Steuereinheit, mittels dem das Funktionsschema aktiviert ist. Die Codierung kann in der Form eines Strichcodes aufgebracht sein, die Erkennungseinheit kann folglich ein Strichcodeleser sein.

Aus der US 7 461 790 B2 ist einen Datenleser, beispielsweise einen Bilderzeugungsleser mit einem CCD- oder CMOS-Sensor oder dergleichen bekannt, der ein Bild eines zu erfassenden Objekts erstellt. Der Sensor verfügt über bestimmte Ausgabemodi in Abhängigkeit von der Lichtintensität: In einem Standardausgabemodus erfasst der Sensor ein Signal entsprechend dem erfassten Bild, in einem weiteren Ausgabemodus gibt der Sensor ein invertiertes Signal aus, wenn die Lichtintensität so stark ist, dass sie den Sensor sättigt.

Die US 2005 / 000 1035 betrifft ein optisches Lesergerät mit einem Bilderfassungsmodus und einem Dekodiermodus. Im Bilderfassungsmodus erfasst und gibt das Lesergerät einen Datenblock von Bilddaten aus ohne zu versuchen, ein decodierbares Signal des Datenblocks zu decodieren. Im Decodiermodus dagegen versucht das Lesergerät ein decodierbares Signal zu decodieren, das der Datenblock repräsentiert. Dazu bildet und wertet er ein Histogramm des Datenblocks aus und passt eine Belichtungszeit an die Auswertung an.

Die US 2002 /007 0278 beschreibt einen Scanner der zweidimensionale Barcodes aus reflektierenden oder emittierenden elektronischen Displays ablesen kann. Seine Beleuchtung, Belichtung und der Kontrast können dabei automatisch an die Art der Darstellung und an Variationen in der Helligkeit oder Reflektivität angepasst werden.

Aus der WO 2006/081466 A2 ist ein Strichcodeleser bekannt, der einen Strichcode aus zwei verschiedenen Blickwinkeln beleuchtet und zu jedem Blickwinkel eine Abbildung des Strichcodes mit einem Sensor aufnimmt. Zu einem Bildbereich gehörende Bildpunkte in den beiden Abbildungen werden derart verarbeltet, dass für die Erkennung des Strichcodes nur derjenige der beiden Bildpunkte herangezogen wird, der die niedrigere Intensität aufweist. Damit werden zu hohe Intensitäten in der Abbildung des Strichcodes, die zu einem Sättigungsverhalten bzw. einer Überbelichtung des betroffenen Pixels des Sensors führen, für die weitere Verarbeitung ausgeschieden.

Es ist daher eine Aufgabe der Erfindung, das Getränkegerät so welterzuentwickeln, dass es ein zuverlässiges Lesen des Strichcodes unter möglichst unterschiedlichen realen Bedingungen gewährleistet.

Die Erfindung wird durch die unabhängigen Ansprüche definiert.

Die abhängigen Ansprüche beschreiben bevorzugte Ausführungsbeispiele.

Das erfindungsgemäße Getränkegerät erfordert also nicht wie der Stand der Technik mehrere Lichtquellen, die bei Leseproblemen den Strichcode aus unterschiedlichen Winkeln beleuchten, wenn er ungünstig positioniert ist. Denn die Erfindung widmet sich darüber hinaus der Lösung weiterer Leseprobleme, nämlich Abnutzungserscheinungen und Alterungseffekten. Sie können sowohl im optischen als auch im elektrischen System auftreten. Diese Betriebsbedingungen können ein zuverlässiges Lesen des Strichcodes erschweren oder unmöglich machen. Verschmutzungen auf oder Kratzer in einem Lesefenster oder ein alterungsbedingtes Driften von Parametern des elektrischen Systems können die Zuverlässigkeit des Strichcodeleser ebenso beeinträchtigen, wie der Abstand des Barcodes zum Lesefenster, der von Lesevorgang zu Lesevorgang variieren kann. Auch das elektrische System des Strichcodelesers, insbesondere im Bereich der LED oder des Sensors, kann nicht zu vernachlässigende Toleranzen aufweisen.

Durch die erfindungsgemäßen Maßnahmen wird die Lesefähigkeit und Zuverlässigkeit des Getränkegeräts verbessert. Denn optische Beeinträchtigungen, wie beispielsweise Kratzer oder Schmutz im optischen System, Abweichungen von einer Sollpositionierung des Codes, aber auch Bauteiltoleranzen im elektrischen System werden ausgeglichen. Die Codeleseeinrichtung des Getränkegeräts kann sich also selbsttätig an die vorliegenden realen Betriebsbedingungen anpassen, die von idealen bzw. originalen Betriebsbedingungen abweichen. Damit sind auch größere Toleranzen bei einem optischen Sensor der Codeleseeinrichtung, bei Lichtquellen und denjenigen Toleranzen möglich, die ein Gehäuse der Codeleseeinrichtung oder des Getränkegeräts betreffen. Dies erschließt für die jeweiligen Komponenten ein gewisses Kosteneinsparungspotential.

Das Getränkegerät kann eine an sich bekannte Codeleseeinrichtung mit einer Lichtquelle umfassen, die den Strichcode der Kapsel beleuchtet. Das vom Strichcode reflektierte Licht wird über ein optisches System der Strichcodeleseeinrichtung auf einem Sensor abgebildet. Der Sensor kann zeilenweise aufgebaut sein, sodass eine jeweils über die Belichtungsdauer akkumulierte Ladungsmenge pro Zelle entweder eine helle oder eine dunkle Stelle des Strichcodes repräsentiert. Im Sensor kann allerdings eine Sättigung hinsichtlich der Ladungsmenge auftreten, die umso früher erreicht wird, je höher die Belichtungsintensität bzw. je höher die Temperatur des Sensors ist. Wird also die Belichtungszeit nicht begrenzt, so erreichen alle Zellen bzw. Pixel das maximale Ladungs- bzw. Sättigungsniveau. Daraufhin kann keine Hell-Dunkeldifferenz zwischen den Balken des Strichcodes mehr ermittelt werden, der Strichcode also nicht mehr gelesen werden.

Die Hell-Dunkeldifferenz erst ermöglicht das Lesen des Barcodes. Daher ist eine möglichst hohe Ladungsdifferenz zwischen jenen Zellen, die eine helle Stelle des Strichcodes repräsentieren, und anderen Zellen erwünscht, die eine dunkle Stelle des Strichcodes repräsentieren. Die Ladungsdifferenz verursacht ein Strichcodesignal, aus dem sich Strichcodeinformationen ermitteln lassen, die als Steuersignale für den Zubereitungsvorgang dienen. Daher müssen Ladungsdifferenzen, die sich durch Störeinflüsse wie z.B. Temperatur und Unschärfe in der optischen Abbildung des Barcodes ergeben, gering gehalten werden, um ein möglichst hohes Verhältnis von Nutzsignalleistung zu Rauschsignalleistung zu erhalten.

Zum Lesen bzw. Erfassen des Barcodes wird zunächst die Ladung der Zellen des Sensors gelöscht. Danach verstreicht eine Belichtungszeit bzw. -dauer während der eine Ladung in den einzelnen Zellen aufintegriert wird. Nach Ablauf der Belichtungsdauer wird der Sensor ausgelesen. Die Belichtungsdauer ist also jene Zeitspanne, die zwischen dem Zeitpunkt des Löschens und dem Zeitpunkt des Auslesens verstreicht. Ein vollständiger Lesevorgang umfasst das Löschen, das Abwarten während der Belichtungsdauer und das Auslesen des Sensors. Ein vom Sensor abgegebenes Strichcodesignal repräsentiert den erfassten Code und kann in digitaler oder analoger Form vorliegen. Liegt ein analoges Strichcodesignal vor, so wird es als Videosignal bezeichnet.

Das Löschen kann über ein explizites Löschsignal erfolgen, das dem Sensor von einem Mikroprozessor aus zugeführt wird. Bei einer anderen Ausbildung des Sensors kann das Löschen auch als Folge des Auslesens des Sensors automatisch in dem Sensor erfolgen. Es ist dann zum Durchführen des ersten Löschvorgangs ein Lösch-Lesevorgang nötig, um ein erstmaliges Löschen des Sensors für eine Reihe von Leservorgängen zu bewirken. Der erste Lösch-Lesevorgang liefert regelmäßig keine nutzbare Information.

Zumindest während des Lesevorgangs ist als Lichtquelle beispielsweise eine Light Emitting Diode (LED) mit einem konstanten Diodenstrom in Betrieb. Damit wird der Strichcode für diese Belichtungsdauer mit konstanter Lichtintensität beleuchtet. Das Licht der LED sollte möglichst hell sein, um gegenüber der Wirkung der Temperatur zu dominieren, die auch einen Beitrag zum Photostrom verursacht.

Die Belichtungssteuerstufe und die Strichcodeerkennungsstufe können als Mikroprozessor realisiert sein. Auf dem Mikroprozessor werden Programmteile abgearbeitet, die die Funktion der beiden Stufen realisieren. Bei Prüf-, Erkennungs- bzw. Vergleichsoperationen in Bezug auf die zu erkennenden Muster des Strichcodes kann eine Arithmetic-Logic-Unit (ALU) des Mikroprozessors zum Einsatz kommen. Wenn der Mikroprozessor als Mikrocontroller realisiert ist, können die Programmteile in einem internen Read Only Memory (ROM) des Mikrocontrollers gespeichert sein. Variable Programmparameter wie z.B. der Wert des Belichtungsparameters oder eine zum Kommunizieren des Erkennungsfehlers bestimmte Programmvariable werden in einem nicht flüchtigen, beschreibbaren internen Speicher (Z.B. EEPROM), in einem Random Access Memory (RAM) oder in Registern des Mikrocontrollers gespeichert. Andernfalls können die Speicher extern zu dem Mikroprozessor angeordnet und über einen geeigneten Bus mit ihm verbunden sein.

Die Strichcodeerkennungsstufe kann auch einen Analog-Digitalwandler des Prozessors nutzen, um z.B. ein analoges Strichcodesignal digital verfügbar zu machen.

Die jeweilige prozessorbasierte Ausbildung kann über Schnittstellen zum Kommunizieren von analogen und/oder digitalen Signalen mit der Umgebung verfügen. Ausgänge des Prozessors können über entsprechende Treiberstufen verfügen, die eine elektrische Last ansteuern können. Solche Treiberstufen bestehen üblicherweise aus Transistoren.

Die Belichtungssteuerstufe kann einen digitalen Zähler des Prozessors nutzen, um die Belichtungsdauer genau einzustellen. Ein solcher Zähler kann zum Zeitpunkt des Löschens des Sensors mit einem dem Wert der Belichtungsdauer entsprechenden Zählerwert geladen werden. Der Zähler wird dann automatisch gemäß der in dem Prozessor zur Verfügung stehenden Zeitbasis immer um den Wert Eins reduziert. Sobald der Zähler den Wert Null erreicht hat, kann der Sensor ausgelesen werden. Das erreichen des Werts Null kann wiederum durch ein Interruptsignal in dem Prozessor erfasst werden, sodass die Strichcodeerkennungsstufe zum Auslesen des Sensors getriggert wird. Das zeitliche Verhalten bzw. Zusammenspiel der Belichtungssteuerstufe und der Strichcodeerkennungsstufe kann jedoch auch vollständig mit Hilfe des Programms realisiert sein.

Die Belichtungssteuerstufe und/oder der Strichcodeerkennungsstufe kann jedoch auch mit Hilfe einer fix verdrahteten Logikschaltung - beispielsweise in diskreter oder integrierter Ausführung - realisiert sein. In beiden Fällen können Transistoren oder vorgefertigte Baugruppen daraus sowie bekannte digitale Bausteine oder "Programmable Logic Arrays" zur Anwendung kommen. Auch andere, zum Beispiel analoge Bauteile können enthalten sein. Der Erkennungsfehler kann durch ein analoges oder ein digitales Signal kommuniziert werden.

Beim Prüfen, ob der erfasste Code erkannt wird, kann eine analoge oder digitale Repräsentation, z.B. ein digitales Wort, des belichteten Codes mit einem bekannten Code verglichen werden. Alternativ kann eine mathematische Größe, die sich durch den belichteten Code ermitteln lässt, mit einer bekannten Größe verglichen werden. Bevorzugt wird eine Prüfziffer, die bereits in dem Code enthalten ist, verwendet, um das Erkennen des Codes zu prüfen. Wenn beispielsweise der Code vier Zeichen und eine Prüfziffer repräsentiert, können z.B. die ersten vier Zeichen verwendet werden, um die Prüfziffer zu bilden. Ist die aus den erfassten ersten vier Zeichen gebildete Prüfziffer identisch mit der erfassten Prüfziffer, so wird der erfasste Code als erkannt klassifiziert. Andernfalls wird ein Erkennungsfehler festgestellt.

Gemäß einer Ausführungsform wird das erstmalige Lesen des Codes bzw. der erstmalige Leseversuch nicht mit einem willkürlich gewählten Wert für die Belichtungsdauer gestartet, was grundsätzlich der Fall sein kann. Vielmehr ist die Belichtungssteuerstufe bei einem erstmaligen Lesen des Codes zum Einstellen eines Startwerts für die Belichtungsdauer ausgebildet. Durch ein systematisches Verändern des Werts ist eine Anpassung an die tatsächlich vorliegenden Alterungserscheinungen im Betrieb des Getränkegeräts möglich.

Zur Berücksichtigung der Alterungserscheinungen ist die Belichtungssteuerstufe zum Verändern des Werts der Belichtungsdauer bezogen auf den Startwert als Folge des Auftretens eines ersten Erkennungsfehlers ausgebildet. Der Startwert wird verändert, indem ein Wert größer oder kleiner als der Startwert gewählt wird. Unabhängig von dem jeweils gewählten Wert bildet dieser gewählte Wert vorteilhafter Weise dann den neuen Ausgangspunkt für weitere Veränderungen des Wertes, wenn auch für diesen Wert kein erfolgreiches Lesen möglich ist.

Die Wahl eines Wertes der Belichtungsdauer kann ungeeignet gewesen sein, um den Code zu erkennen, so dass ein Erkennungsfehler vorliegt. Um auch weitere Erkennungsfehler zu berücksichtigen, kann ausgehend von dem Startwert und je nach Wahl des ersten Wertes der Belichtungsdauer dieser Wert in eine Richtung - also zu ansteigenden oder abfallenden Werten hin - weiter verändert werden. Gemäß einem Ausführungsbeispiel der Erfindung ist jedoch die Belichtungssteuerstufe als Folge des Auftretens weiterer Erkennungsfehler zum weiteren Verändern des Werts der Belichtungsdauer bezogen auf den Startwert ausgebildet. Das Verändern des Wertes erfolgt dabei so, dass für (unmittelbar oder mittelbar) benachbarte Erkennungsfehler abwechselnd größere und kleinere Werte als der Startwert gewählt werden. Es wird also z.B. ausgehend von dem Startwert ein Wert gewählt, der größer als der Startwert ist. Tritt auch für diesen Wert ein Erkennungsfehler auf, wird ein neuer Wert gewählt, der kleiner als der Startwert ist. Es wird also für unmittelbar benachbarte Erkennungsfehler abwechselnd ein größerer oder ein kleinerer Wert als der Startwert gewählt. Das Wechseln zwischen Werten, die größer oder kleiner als der Starwert sind kann jedoch auch für nicht unmittelbar benachbarte, sondern mittelbar benachbarte Erkennungsfehler erfolgen. Dabei werden beispielsweise für eine Folge von unmittelbar benachbarten Erkennungsfehlern Werte gewählt, die größer als der Startwert sind, und für eine an die vorangehende Folge anschließende weitere Folge von unmittelbar benachbarten Erkennungsfehlern Werte gewählt, die kleiner als der Startwert sind.

Für (unmittelbar oder mittelbar) benachbarte Erkennungsfehler wird ein Absolutwert bzw. Betrag einer Differenz zwischen dem jeweiligen Wert und dem Startwert vergrößert oder er bleibt gleich. Der Absolutwert gibt den Abstand zum Startwert an. Dies hat gegenüber der vorangehend beschriebenen Möglichkeit den Vorteil, dass beide möglichen Richtungen bzw. Freiheitsgrade beim Suchen nach dem passenden Wert für die Belichtungsdauer quasi gleichzeitig bzw. ineinander verschachtelt sukzessive abgearbeitet werden und daher die Zeit bis zum Auffinden des geeigneten Werts für die Belichtungsdauer möglichst kurz gehalten wird.

Um eine verfeinerte Suche nach dem passenden Wert durchzuführen, kann beispielsweise sowohl zu größeren Werten hin, als auch zu kleineren Werten hin der gleiche Absolutwert besagter Differenz für jeweils zwei unmittelbar oder mittelbar benachbarte Erkennungsfehler angewendet werden. Erst danach wird zu einem größeren Absolutwert gewechselt. Dies kann das Verfahren zwar eventuell verlangsamen, dafür sind aber Lücken in der zuvor beschriebenen Suche zuverlässig vermieden. Außerdem kann eine Suche nach dem geeigneten Wert der Belichtungsdauer ausgehend von einer maximalen Abweichung von dem Startwert gestartet werden. Es wird also ein Wert gewählt, der die maximale Abweichung repräsentiert. Ausgehend von diesem Wert erfolgt dann schrittweise von Erkennungsfehler zu Erkennungsfehler eine Annäherung an den Startwert, was jedoch ein rasches Auffinden möglicherweise verzögern könnte. Es können auch andere Suchoperationen, wie beispielsweise ein Halbieren von Intervallen und dergleichen zur Anwendung kommen. In allen Fällen wird ein geeigneter Wert für die Belichtungsdauer aufgefunden, mit dessen Hilfe das Lesen des Strichcodes erfolgreich, also fehlerfrei, durchgeführt werden kann. Diese Prozeduren können unabhängig von dem jeweiligen Getränkegerät und für alle einen optisch lesbaren Code tragenden Verpackungen gleichartig angewendet werden.

Um jedoch Alterungseffekte zu berücksichtigen, hat es sich als besonders vorteilhaft erwiesen, wenn die Belichtungssteuerstufe zum Berücksichtigen einer Lebenszeit des Getränkegeräts dahingehend ausgebildet ist, dass ein Startwert in Abhängigkeit von der Lebenszeit erhöht wird. Die Anpassung kann dabei pauschal in Abhängigkeit von der Lebenszeit erfolgen. Dabei kann der Startwert beispielsweise stufenweise oder kontinuierlich oder gemäß einer mathematischen Funktion verändert, zum Beispiel erhöht werden. Grundsätzlich kann der Startwert auch verringert werden. Da jedoch bei einer Alterung vorwiegend mit einer zunehmenden Verunreinigung oder Beschädigung des optischen Systems durch einen zunehmenden Verschleiß an einem Lesefenster bedingt durch Kratzer oder Trübung oder mit einer nachlassenden Helligkeit der Lichtquelle zu rechnen ist, wird die Belichtungsdauer vorzugsweise verlängert bzw. die Belichtungsintensität erhöht. Durch eine Verlängerung der Belichtungsdauer lässt sich nämlich z.B. eine unscharfe Abbildung des Strichcodes bedingt durch Kratzer im Lesefenster oder Positionierungsmängel bekämpfen. Eine unscharfe Abbildung kann durch Bestimmung der ersten Ableitung der Abbildung ermittelt werden. Die Ermittlung der Lebenszeit kann über einen Zähler erfolgen, der gemäß einem voreingestellten Intervall während des Betriebs der Getränkeeinrichtung verändert wird. Auch die Anzahl der Brühvorgänge kann als Indikator für die zu berücksichtigende Lebenszeit erfasst werden.

Die Berücksichtigung der Lebenszeit kann gemäß einer weiteren vorteilhaften Ausbildungsform dadurch erfolgen, dass der Startwert in Abhängigkeit einer detektierten Alterung veränderlich ist. Er kann dazu durch jenen Wert der Belichtungsdauer gegeben sein, bei dem bei einem vorangehenden Lesen eines Codes kein Erkennungsfehler aufgetreten ist, bei dem also erfolgreich gelesen wurde. Der veränderliche Startwert kann jedoch auch durch eine statistische Größe mehrerer Werte der Belichtungsdauer gegeben sein, bei denen jeweils bei einem vorangehenden Lesen eines Codes kein Erkennungsfehler aufgetreten ist. Dies kann beispielsweise ein Mittelwert, ein Minimalwert oder ein Maximalwert dieser Gruppe von Werten oder eine ähnliche statistische Größe sein. Die Belichtungssteuerstufe ist zum Wählen des veränderlichen Startwerts bei jedem erstmaligen Lesen des Codes ausgebildet. Diese Ausbildungsform hat gegenüber der vorangehend beschriebenen Ausbildungsform den Vorteil, dass sie bei sich graduell verändernden realen Betriebsbedingungen meist rascher den passenden bzw. geeigneten Wert für den Belichtungsparameter findet, weil der zuletzt gefundene Wert oder die statistische Größe Verwendung findet. Dies ist eine Art Lern- bzw. Anpassungseffekt an besagte reale Betriebs- bzw. Alterungsbedingungen.

Es kann auch die pauschale Anpassung und die Anpassung bedingt durch die detektierte Alterung gemeinsam vorgenommen werden. Der Beitrag beider Anpassungen kann gewichtet in den veränderlichen Startwert einfließen.

Die Erfindung berücksichtigt außerdem die Tatsache, dass auch die Temperatur der bei der Codeleseeinrichtung zum Einsatz kommenden elektrischen Bauteile einen nicht zu vernachlässigenden Einfluss auf den zu wählenden Wert der Belichtungsdauer hat. Es hat sich gemäß einer bevorzugten Ausbildungsform daher als vorteilhaft erwiesen, dass die Codeleseeinrichtung einen Temperatursensor zum Messen einer bei der Sensorstufe vorliegenden Temperatur aufweist und dass die Belichtungssteuerstufe zum Berücksichtigen der gemessenen Temperatur ausgebildet ist. Der Temperatursensor kann beispielsweise als physikalischer Sensor die Temperatur direkt oder indirekt messen. Die Verwendung eines separaten Temperatursensors hat den Vorteil, dass bereits vor einem ersten Lesevorgang abschätzbar ist, welcher Wert für die Belichtungsdauer zu wählen ist, um einem Erkennungsfehler vorzubeugen. Hierbei kann z.B. ein temperaturempfindliches Bauteil mit einem positiven Temperaturkoeffizienten, auch PTC genannt, oder mit einem negativen Temperaturkoeffizienten, auch NTC genannt, zum Einsatz kommen. Der temperaturempfindliche Bauteil wird z.B. mit der Sensorstufe verklebt oder an ihr angeschraubt.

Die indirekte Messung kann z.B. mit Hilfe der mittleren Helligkeit der Abbildung eines Stichcodes erfolgen. Insbesondere dann, wenn eine Sensorstufe zum Verarbeiten einer optischen Abbildung des Codes verwendet wird, die auf dem Prinzip der akkumulierten Ladungsmenge während der Belichtungsdauer basiert, ist es von Vorteil, wenn bei zunehmender Temperatur die Belichtungsdauer reduziert und die Belichtungsintensität erhöht wird.

Bevorzugt wird die Temperatur der Sensorstufe selbst gemessen, weil genau hier eine zu starke Temperaturerhöhung zu einer Sättigung eines Signals der Sensorstufe führen kann, sodass auf Grundlage dieses Signals der Strichcode nicht mehr zu erkennen ist. Es kann jedoch auch die Temperatur in der Umgebung der Sensorstufe gemessen werden.

Es kann als indirekter Indikator für die Temperatur auch die Anzahl von relativ rasch hintereinander durchgeführten Brühvorgängen verwendet werden. Beispielsweise kann nach fünf Brühvorgängen davon ausgegangen werden, dass die Temperatur in der Brühkammer ca. 70°C beträgt und daher diese Temperatur dann auch bei der benachbarten Sensorstufe vorliegt. Bei der indirekten Messung ist der Temperatursensor z.B. mit Hilfe von Software realisiert, die auf dem Mikroprozessor abgearbeitet wird.

Die gemessene Temperatur kann für jeden Wert der Belichtungsdauer berücksichtigt werden, also bereits ab dem Startwert. Es kann jedoch auch nur der jeweilige Startwert korrigiert werden, da die weitere Veränderung des Werts der Belichtungsdauer bezogen auf den Startwert erfolgt. Zudem kann auch eine Korrektur erst bei Vorliegen einer gewissen Temperaturschwellewerts erfolgen. Die Temperatur kann aber auch erst ab einer bestimmten Betriebsdauer während einer Suchsequenz berücksichtigt werden, wenn beispielsweise ein Temperaturschwellwert überschritten wird. Gegebenenfalls kann die Berücksichtigung der Temperatur auch während des Betriebs wegfallen. Diese Situation kann eintreten, wenn ab einem Zeitpunkt eine Temperaturschwelle unterschritten wird. Ab diesem Zeitpunkt kann dann eine temperaturbedingte Verschiebung des jeweiligen Wertes des Belichtungsparameters wegfallen.

In einer weiteren Ausbildungsform kann der jeweilige Wert der Belichtungsdauer in Bezug auf einen Wert oder Werte der Vergangenheit und unter Berücksichtigung der Temperatur dahingehend geregelt werden, dass das Signal-Rauschverhältnis im Signal der Sensorstufe optimiert ist, also keine Überbelichtung im Sinne einer Sättigung des Signalverlaufs bedingt durch die Temperatur bzw. die Wahl des Wertes der Belichtungsdauer auftritt.

Das Getränkegerät umfasst regelmäßig eine Brühkammer, die zum Aufnehmen einer mit Brühgut gefüllten und durch besagten Code gekennzeichneten Brühgutverpackung, insbesondere in Form einer Kapsel, die den Code aufweist, ausgebildet ist. Gemäß einer bevorzugten Ausführungsform weist das Getränkegerät einen Schalter auf, mit dessen Hilfe das Lesen des Codes gestartet wird. Der Code ist durch einen Strichcode und die Codeleseeinrichtung durch eine Strichcodeleseeinrichtung gebildet. Die Strichcodeleseeinrichtung weist eine Belichtungsstufe auf, die zum Belichten des Strichcodes mit künstlichem Licht ausgebildet ist. Die Strichcodeleseeinrichtung weist die opto-elektronische Sensorstufe auf, die zum Erzeugen eines Strichcodesignals ausgebildet ist, das eine Abbildung des belichteten Strichcodes repräsentiert. Die Strichcodeleseeinrichtung weist eine der Sensorstufe im optischen Strahlengang vorangehend gelagerte Abbildungsstufe auf, die zum Erzeugen der Abbildung des belichteten Strichcodes für die Sensorstufe ausgebildet ist. Die Abbildungsstufe kann z.B. eine Lochblende, eine Linse oder eine Kombination dieser Elemente umfassen. Die Strichcodeleseeinrichtung weist die Strichcodeerkennungsstufe auf, die unter Ausnutzung des Strichcodesignals zum Erkennen des Strichcodes und bei einem Auftreten eines Erkennungsfehlers zum Ansteuern der Belichtungssteuerstufe ausgebildet ist. Bei dem Getränkegerät handelt es sich insbesondere um eine Kaffee- bzw. Teemaschine für den Haushaltsgebrauch. Demgemäß kann das Brühgut Kaffee oder Tee mit oder ohne Zusätze sein und der Code dient zur Identifizierung des Brühgutes bzw. zum Identifizieren von Parametern für einen geeigneten Brühprozess.

Die oben genannte Aufgabe wird bei einem Verfahren der eingangs genannten Art dadurch gelöst, dass der Wert der Belichtungsdauer in Abhängigkeit von einem Auftreten eines Erkennungsfehlers beim Prüfen auf Erkennung des Codes verändert wird. Dadurch wird die Lesefähigkeit des Getränkegeräts erheblich verbessert, weil das Verfahren realen Betriebsbedingungen Rechnung trägt, so wie dies im Zusammenhang mit dem erfindungsgemäßen Getränkegerät erörtert wurde. Die vorteilhaften Aspekte der Erfindung aus den abhängigen Verfahrensansprüchen ergeben sich aus der obigen Beschreibung des Getränkegeräts analog.

Gemäß einem Aspekt der Erfindung wird bei einem erstmaligen Lesen des Codes für den Belichtungsparameter ein Startwert eingestellt. Gemäß einem bevorzugten Ausführungsbeispiel wird als Folge des Auftretens eines ersten Erkennungsfehlers der Wert der Belichtungsdauer verändert. Die Veränderung des Werts erfolgt bezogen auf den Startwert und kann zu größeren oder kleineren Werten für die Belichtungsdauer führen.

Das Prinzip der Erfindung wird im Folgenden anhand einer Zeichnung beispielshalber noch näher erläutert. In den Zeichnungen zeigen:
- Figur 1:: ein Blockschaltbild des Getränkegeräts gemäß der Erfindung;
- Figur 2:: ein Flussdiagramm für ein Verfahren gemäß einem ersten Ausführungsbeispiel der Erfindung;
- Figur 3:: ein Ablaufdiagramm des Verfahrens gemäß dem ersten Ausführungsbeispiel;
- Figur 4:: ein Ablaufdiagramm des Verfahrens gemäß einem zweiten Ausführungsbeispiel;
- Figur 5:: ein Ablaufdiagramm des Verfahrens gemäß einem dritten Ausführungsbeispiel;
- Figur 6:: einen ersten Signalverlauf eines in dem Getränkegerät auftretenden Strichcodesignals;
- Figur 7:: einen zweiten und einen dritten Signalverlauf des Strichcodesignals;
- Figur 8:: einen vierten Signalverlauf des Strichcodesignals;
- Figur 9:: einen fünften Signalverlauf des Strichcodesignals.

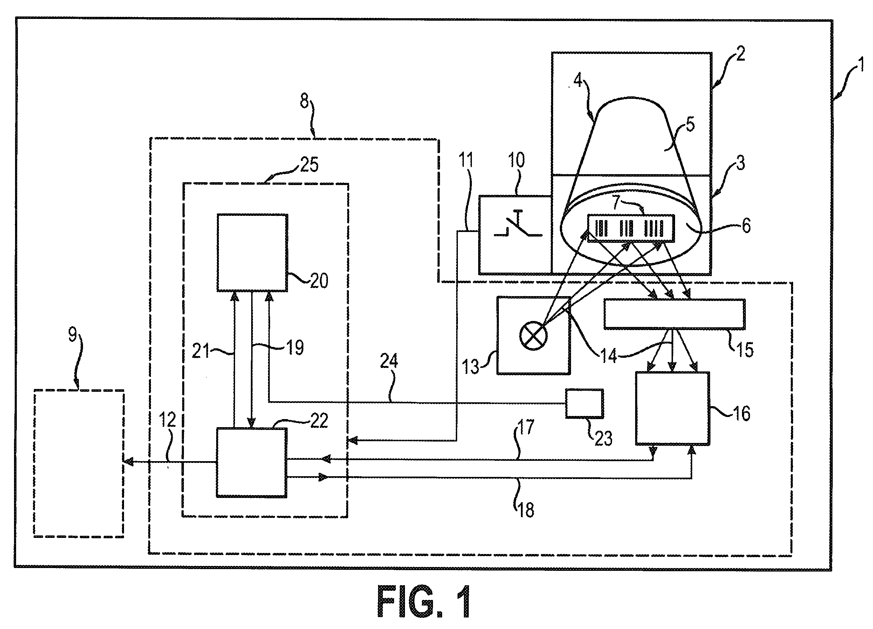

In der Figur 1 ist ein Blockschaltbild eines Getränkegeräts 1 gemäß einem ersten Ausführungsbeispiel der Erfindung abgebildet, das eine Kaffeemaschine symbolisiert. Das Getränkegerät 1 weist eine Brühklammer 2 auf, in die eine Kapsel 4 eingelegt ist. Zur Verdeutlichung ist die Kapsel 4 in einer perspektivischen Darstellung abgebildet. Sie weist einen Kapselkörper 5 auf, in dem gemahlener Kaffee aufgenommen ist. Er ist durch einen Deckel 6 aus Aluminiumfolie verschlossen. Auf dem Deckel 6 ist ein Strichcode 7 aufgedruckt, der Informationen für einen korrekten Brühprozess enthält, um ein optimales Kaffeegetränk zu erhalten. Der Deckel 6 liegt auf einem Lesefenster 3 auf, so dass der Strichcode 7 mit Hilfe einer Strichcodeleseeinrichtung 8, die zum Lesen des Strichcodes 7 ausgebildet ist, gelesen werden kann.

Die übrigen erforderlichen Bestandteile des Getränkegeräts 1, beispielsweise ein Wassertank, ein Leitungssystem, eine Heizung zum Erwärmen des Wassers usw. sind nicht separat dargestellt, sondern in einer Baugruppe 9 zusammengefasst. Im Zusammenhang mit der Brühkammer 2 sei lediglich darauf hingewiesen, dass ein Mikroschalter 10 den Verschluss der Brühkammer 2 überwacht und, sobald die Brühkammer 2 verschlossen ist, die Strichcodeleseeinrichtung 8 durch ein Startsignal 11 des Mikroschalters 10 gestartet wird. Die Strichcodeleseeinrichtung 8 gibt bei einem erfolgreichen Lesen bzw. Erkennen des Strichcodes 7 ein erstes Steuersignal 12 an die Baugruppen 9 ab, so dass ein dem Informationsgehalt des Steuersignals 12 entsprechendes Brühen des Brühgutes in der Brühkammer 2 erfolgen kann.

Die Strichcodeleseeinrichtung 8 weist eine Belichtungsstufe 13 mit einer Leuchtdiode (Light Emitting Diode, LED) auf, die den Strichcode 7 im Betrieb mit Licht 14 anstrahlt. Das Licht 14 wird von dem Strichcode 7 entsprechend der Hell-Dunkelmodulation der Striche mit unterschiedlicher Intensität reflektiert. Das reflektierte Licht trifft auf eine Linse als Abbildungsstufe 15. Die Abbildungsstufe 15 ist der Sensorstufe 16 im optischen Strahlengang vorgelagert. Mit Hilfe der Abbildungsstufe 15 wird eine Abbildung des belichteten Strichcodes 7 für eine Sensorstufe 16 erzeugt.

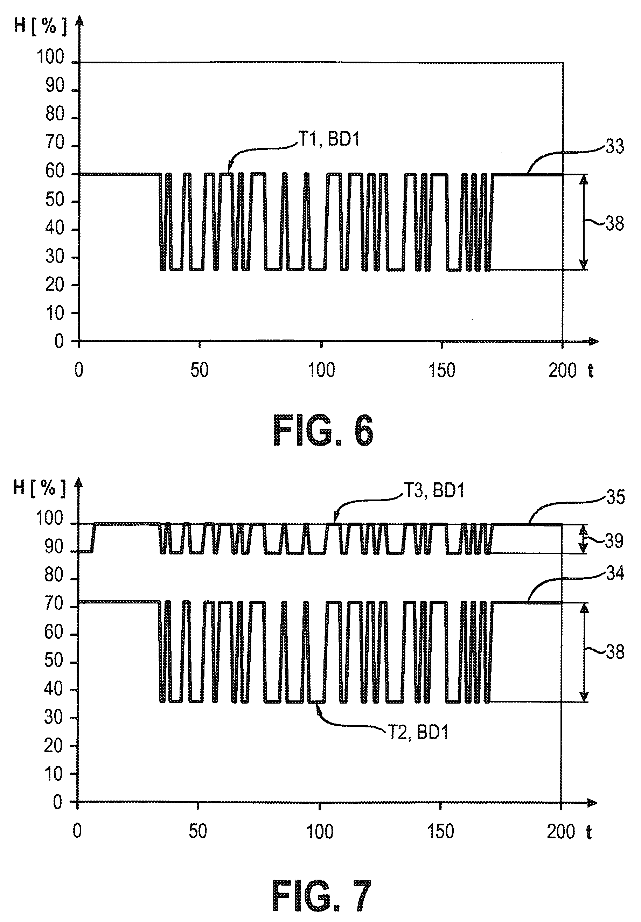

Die Sensorstufe 16 weist eine Empfängerfläche mit einer Zeile von Sensorelementen oder Pixeln (nicht dargestellt) auf, auf welche der Strichcodes 7 abgebildet wird. Ausgehend von einem gelöschten Zustand weist jedes Pixel am Ende einer Belichtungsdauer eine Ladungsmenge auf, die entweder einen hellen Bereich des Strichcodes 7 oder einen dunklen Bereich des Strichcodes 7 repräsentiert. Das Auslesen der Ladungsmenge der Pixel erfolgt sequenziell, was im Wesentlichen dem Auslesevorgang bei einem Charge-Coupled-Device (CCD) entspricht. Bei dem sequentiellen Auslesen erzeugt die Sensorstufe 16 ein Strichcodesignal 17, das eine analoge Abbildung - auch Videosignal genannt - des belichteten Strichcodes 7 repräsentiert (siehe z.B. Figur 6). Die Sensorstufe 16 empfängt ein Löschsignal 18, das die während der Belichtungsdauer angesammelte Ladungsmenge löscht, um die Sensorstufe 16 für einen neuen Leservorgang vorzubereiten.

Getriggert durch ein Triggersignal 19 liest eine Strichcodeerkennungsstufe 22 das Strichcodesignal 17 von der Sensorstufe 16 ein. Die Strichcodeerkennungsstufe 22 ist auf bekannte Weise zum Abrufen, Empfangen und Auswerten des Strichcodesignals 17 und zum Prüfen bzw. Entscheiden ausgebildet, ob das Strichcodesignal 17 einen gültigen. Strichcode 7 repräsentiert oder nicht. Dabei wird von der Strichcodeerkennungsstufe 22 zunächst das Strichcodesignal 7 eingelesen und digitalisiert und danach das so ermittelte digitale Abbild des Strichcodes 7 in einem Random Access Memory (RAM) (nicht dargestellt) gespeichert und steht dort zur weiteren Prüfung bereit. Bei der Prüfung wird eine in dem erfassten Strichcode 7 enthaltene Prüfziffer kontrolliert. Ein Erkennungsfehlersignal 21 wird dann generiert, wenn keine gültige Prüfziffer vorliegt. Es ist somit ein Erkennungsfehler aufgetreten. Das Erkennungsfehlersignal 21 wird an eine Belichtungssteuerstufe 20 abgegeben. Sie verändert einen Wert der Belichtungsdauer in Abhängigkeit bzw. als Folge von einem Auftreten eines Erkennungsfehlers beim Lesen bzw. Prüfen des Strichcodes 7. Nach Ablauf der Belichtungsdauer wird das Triggersignal 19 von der Belichtungssteuerstufe 20 generiert.

Ein vollständiger Erfassungsvorgang umfasst also das Löschen der Pixel, das Ablaufen lassen der Belichtungsdauer und das abschließende Auslesen des Strichcodesignals 17.

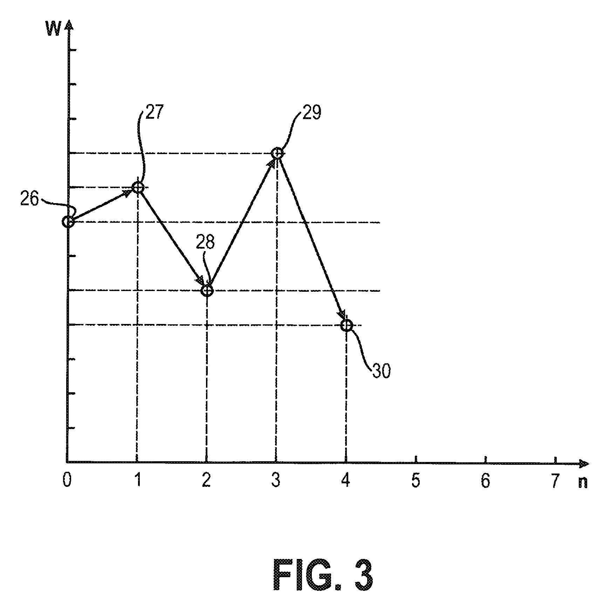

Der Strichcodeerkennungsstufe 22 wird auch das Startsignal 11 zugeführt. Daraufhin generiert die Strichcodeerkennungsstufe 22 erstmalig das Löschsignal 18 und gibt es an die Sensorstufe 16 ab. Dann erfolgt ein erstmaliges Lesen bzw. Erfassen des Strichcodes 7. Dazu wird von der Belichtungssteuerstufe 20 ein Startwert für die Belichtungsdauer eingestellt, bei dem bei einem vorangehenden Lesen des Strichcodes 7 kein Erkennungsfehler aufgetreten ist. Der Startwert wird üblicherweise aus einem nichtflüchtigen Speicher (ROM oder EPROM) gelesen (nicht dargestellt) und bildet den Ausgangspunkt für Erkennungs- bzw. Leseversuche. Als Folge des Auftretens eines ersten Erkennungsfehlers wird der Wert der Belichtungsdauer bezogen auf den Startwert durch die Belichtungssteuerstufe 20 verändert. Die Art der Veränderung ist unten in den Figuren 3 bis 5 beschrieben. Sowohl der veränderliche Startwert als auch der Wert für die Anzahl der Brühvorgänge wird in dem EEPROM gespeichert, um im Laufe des Gerätelebens nicht verloren zu gehen.

Um auch thermische Einflüsse auf die Lesbarkeit des Strichcodes 7 zu berücksichtigen, weist die Strichcodeleseeinrichtung 8 einen Temperatursensor 23 auf, mit dem die Temperatur der Sensorstufe 16 gemessen wird. Die gemessene Temperatur wird mit einem Temperatursignals 24 an die Belichtungssteuerstufe 20 abgegeben. Die Belichtungssteuerstufe 20 berücksichtigt die Temperatur, worauf nachfolgend noch im Detail eingegangen ist.

Die Belichtungssteuerstufe 20 und die Strichcodeerkennungsstufe 22 bildet ein Mikrocontroller 25, auf dem ein Programm abgearbeitet wird, das entsprechend einem erfindungsgemäßen Verfahren abläuft, worauf nachfolgend im Detail eingegangen ist. Durch ein Abarbeiten des Programms werden die Funktionen der beiden Stufen 20 und 22 realisiert. Da das Erkennungsfehlersignal 21 innerhalb des Mikrocontrollers 25 auftritt, ist es mit einer Programmvariable realisiert, die einen bestimmten Wert annimmt, der den Erkennungsfehler anzeigt. Über einen internen Datenbus 41 des Mikrocontrollers 25 werden Datensignale kommuniziert, welche zumindest das Erkennungssignal 21, das Triggersignal 19 oder die Belichtungsdauer repräsentieren.

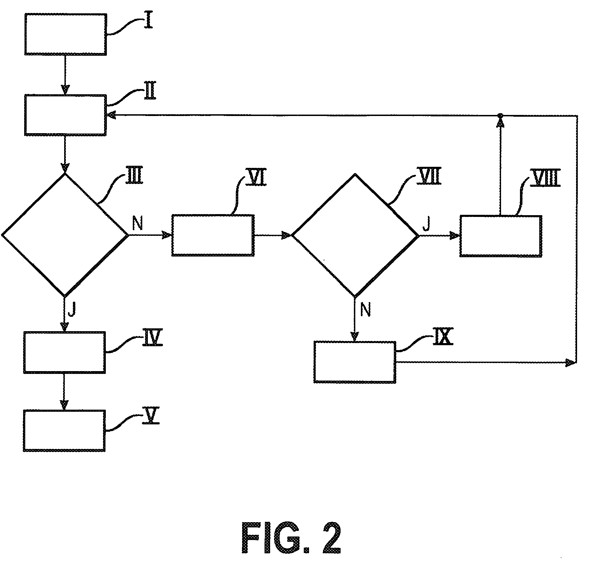

Im Folgenden wird die Funktion des Getränkegeräts 1 anhand der Figuren 2 und 3 näher erläutert, wobei bei dem Verfahren eine Belichtung der Pixel gemäß einer veränderlichen Belichtungsdauer gesteuert wird. Gemäß diesem Verfahren wird ein Wert der Belichtungsdauer in Abhängigkeit von einem Auftreten eines Erkennungsfehlers beim Lesen des Strichcodes verändert. Das Verfahren startet in einem Block I mit dem Schließen der Brühkammer 2, wodurch der Mikroschalter 10 betätigt wird, der das Startsignal 11 verursacht.

Daraufhin wird im Block II zunächst das Löschsignal 18 an die Sensorstufe 16 ausgegeben. Da es sich um ein erstmaliges Lesen des Strichcodes 7 handelt, wird bei der Belichtungssteuerstufe 20 für die Belichtungsdauer ein in dem in der Figur 3 abgebildeten Diagramm eingetragener Startwert 26 eingestellt. In Figur 3 sind auf der Abszisse die Werte W der Belichtungsdauer und auf der Ordinate die Anzahl der Lesefehler n ablesbar.

Daraufhin wird in einem Block III (Figur 2) geprüft, ob das Lesen des Strichcodes 7 erfolgreich war. Wenn dem so ist, wird zu einem Block IV verzweigt und der zuletzt gefundene Wert der Belichtungsdauer als veränderlicher Startwert 26 für einen neuerlichen Leseversuchszyklus gespeichert. Dies entspricht einer Berücksichtigung der Lebenszeit des Getränkegeräts 1. Das Verfahren endet schließlich in einem Block V.

Wenn jedoch bei der Prüfung in Block III festgestellt wird, dass ein Erkennungsfehler beim Lesen des Strichcodes 7 aufgetreten ist, wird zu einem Block VI verzweigt. Hier wird als Folge des Auftretens des Erkennungsfehlers bei der Strichcodeerkennungsstufe 22 das Erkennungsfehlersignal 21 an die Belichtungssteuerstufe 20 abgegeben. In einem weiteren Block VII wird dann bei der Belichtungssteuerstufe 20 geprüft, ob es sich um den ersten Erkennungsfehler in einer Lesesequenz handelt. Wenn dem so ist, wird zu dem Block VIII verzweigt, bei dem ein erster Wert 27 gewählt wird, der größer als der Startwert 26 ist. Das Verfahren wird dann bei dem Block II fortgesetzt, wobei der zuvor gewählte Startwert 26 durch den ersten Wert 27 ersetzt wird.

Es wird nun angenommen, dass auch dieser erste Wert 27 nicht zu einem erfolgreichen Lesen des Strichcodes 7 führt. In Folge wird bei dem Block VII festgestellt, dass es sich nicht um den ersten Erkennungsfehler handelt, und es wird zu einem Block IX verzweigt. Bei dem Block IX wird als Folge des Auftretens weiterer Erkennungsfehler nach dem ersten Erkennungsfehler der Wert der Belichtungsdauer bezogen auf den Startwert 26 dahingehend verändert, dass von Erkennungsfehler zu Erkennungsfehler abwechselnd größere Werte 29 und kleinere Werte 28 bzw. 30 als der Startwert 26 gewählt werden. Für jeden neuen Erkennungsfehler wird der jeweilige Absolutwert der Differenz zwischen dem jeweiligen Wert 28, 29 und 30 und dem Startwert 26 vergrößert. Diese Situation ist in der Figur 3 mit Hilfe von auf- und absteigenden Pfeilen zwischen den einzelnen Werten 26, 27, 28, 29 und 30 visualisiert. Es werden also alternierend Werte 27, 28, 29 und 30 um den Startwert 26 bzw. auf beiden Seiten des Startwerts 26 gewählt, die sich betragsmäßig immer weiter von dem Startwert 26 entfernen. Das Verfahren wird danach bei dem Block II fortgesetzt, wobei jeweils der zuletzt gewählte Wert 28, 29 oder 30 zur Anwendung kommt. Wird in einer vorgegebenen Zeitspanne oder in einem vorgegebenen Wertebereich kein Wert gefunden, für den ein erfolgreiches Lesen des Strichcodes 7 möglich ist, so kann einerseits ein Standardbrühprozess gestartet werden oder andererseits ohne den Start eines Brühprozesses eine Fehlermeldung an dem Getränkegerät 1 ausgegeben werden.

Bei dem vierten Wert 30 ist der letzte Leseversuch erfolgreich und das Verfahren endet bei dem Block V.

In weiterer Folge wird nach dem Schließen der Brühkammer, also bei einem neuerlichen Start des Lesens des Strichcodes 7 oder bei einem neuerlichen erstmaligen Lesen eines Strichcodes 7 bei dem Block I der zuletzt gespeicherte vierte Wert 30 als der veränderliche Startwert 26 verwendet und die weiteren Schritte des Verfahrens gemäß den vorangehenden Erläuterungen zu den Blöcken I bis IX durchlaufen.

Das vorstehend erörterte Verfahren läuft relativ rasch ab, so dass für die Schritte des Löschens der Ladungsmenge, des Belichtens des Strichcodes 7, des Auslesens des Strichcodesignals 17 und des Verarbeitens des Strichcodesignals 17 nur ca. 10 Millisekunden benötigt werden und daher selbst bei einer oftmaligen Veränderung des Werts der Belichtungsdauer in relativ kurzer Zeit (ca. 1 bis 15 Sekunden) mit einem erfolgreichen Lesen des Strichcodes zu rechnen ist. Die Werte für die Belichtungsdauer werden beispielsweise in Schritten von 100, 200, 300 usw. Millisekunden verändert.

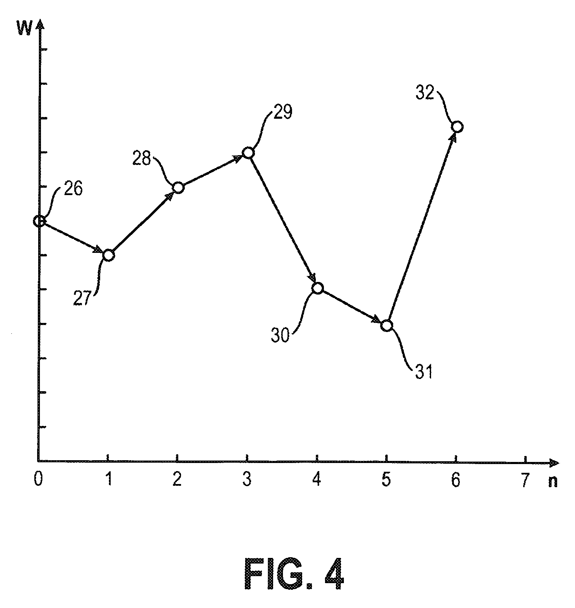

In der Figur 4 ist ein weiteres Ausführungsbeispiel des erfindungsgemäßen Verfahrens dargestellt. Demnach werden jeweils zwei unmittelbar benachbarten Erkennungsfehlern der gleiche Absolutwert der Differenz zwischen dem Startwert 26 und den jeweiligen Paaren von Werten 27 und 28, 29 und 30, sowie 31 und 32 zugewiesen. Von einem Paar zum nächsten wird jeweils zu einem größeren Absolutwert gewechselt, bis schließlich nach einem fünften Wert 31 bei dem sechsten Wert 32 ein erfolgreiches Lesen des Strichcodes 7 durchgeführt wird.

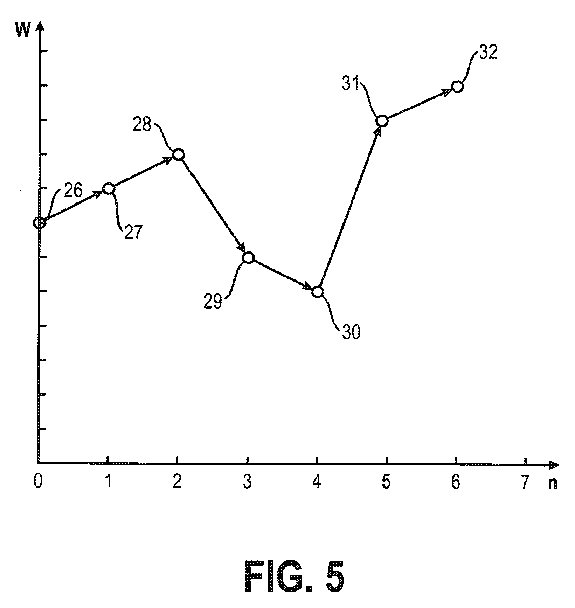

In der Figur 5 ist ein weiteres Ausführungsbeispiel des Verfahrens dargestellt. Zwei nicht unmittelbar benachbarten Erkennungsfehlern werden gleich große Absolutwerte zugeordnet. Die gleich großen Absolutwerte treten also im Vergleich zu dem vorangehend beschrieben Ausführungsbeispiel immer um einen dazwischen liegenden Erkennungsfehler versetzt auf. Es sind also gleiche Absolutwerte für die Paare der Werte 27 und 29, 28 und 30, usw. erhalten.

Eine sinngemäße Anpassung des Verfahrensablaufs an die in den Figuren 4 und 5 visualisierten Situationen erfolgt in dem in der Figur 2 abgebildeten Ablaufdiagramm in den Blöcken VII, VIII und IX, wo über die Vergabe der Werte 27 bis 32 entschieden wird. Dementsprechend ist auch die Funktion des Getränkegeräts 1 angepasst.

In den Figuren 6 bis 9 wird der Einfluss der Temperatur der Sensorstufe 16 auf die Lesbarkeit des Strichcodes 7 und eine Möglichkeit zur Berücksichtigung der Temperatur erläutert. In den Diagrammen der Figur 6 bis 9 ist auf der Abszisse die Zeit t und auf der Ordinate die Helligkeit H in % aufgetragen. 100% Helligkeit entspricht der maximal möglichen akkumulierten Ladung pro Pixel.

Gemäß Figur 6 wird von einem definierten Startwert 26 der Belichtungsdauer BD1 ausgegangen, sodass bei einer Ausgangstemperatur T1 das Strichcodesignal 17 mit seinem ersten Signalverlauf 33 erhalten ist Der erste Signalverlauf 33 repräsentiert helle Bereiche und dunkle Bereiche der Striche des Strichcodes 7 über der Zeit t. Der erste Signalverlauf 33 zeigt einen ersten Signalwertunterschied 38 zwischen hellen und den dunklen Bereichen des Strichcodes 7. Es liegt ein relativer Unterschied in der Helligkeit H von ca. 35 % vor.

Steigt nun bei unveränderter Belichtungsdauer BD1 die Temperatur moderat von T1 zu T2 an, so führt dies zu dem in der Figur 7 dargestellten unteren, zweiten Signalverlauf 34. Der zweite Signalverlauf 34 weist ebenfalls den ersten Signalwertunterschied 38 auf. Im Vergleich zu der Figur 6 wird also lediglich eine relativ geringe Verschiebung (ca. 10%) hin zu einer höheren Helligkeit H festgestellt. Diese Verschiebung ist im gesamten zweiten Signalverlauf 34 zu beobachten.

Steigt bei unveränderter Belichtungsdauer BD1 die Temperatur von T2 weiter auf T3 an, so kann dies zu einem in der Figur 7 dargestellten oberen, dritten Signalverlauf 35 führen. Der dritte Signalverlauf 35 weist einen zweiten Signalwertunterschied 39 auf, der wesentlich kleiner als der erste Signalwertunterschied 38 ist, obwohl nach wie vor die gleiche Belichtungsdauer BD1 verwendet wird. Deutlich zu sehen ist, wie in dem dritten Signalverlauf 35 dunkle Bereiche auf ca. 90 % der Helligkeit H angehoben sind. Helle Bereiche werden in dem dritten Signalverlauf 35 auf maximal 100 % der Helligkeit angehoben bzw. begrenzt. Im Vergleich zu dem ersten Signalwertunterschied 38 beträgt der zweite Signalwertunterschied 39 nur mehr 10% der Helligkeit H. Das Anheben der dunklen Bereiche des dritten Signalverlaufs 35 bei einer gleichzeitigen Reduktion des Signalwertunterschiedes im Vergleich zu dem zweiten Signalverlauf 34 bedeutet, dass bei der Sensorstufe 16 eine durch zu hohe Temperatur verursachte Sättigung eingetreten ist, was auch als Überbelichtung verstanden werden kann. Folglich ist der dritte Signalverlauf 35 an seiner Oberseite (helle Bereiche) abgeschnitten. Da jedoch genau der Signalwertunterschied als nutzbares Signal in die Bestimmung eines Signal-Rauschverhältnisses eingeht, ist das Signal-Rauschverhältnis für den dritten Signalverlauf 35 erheblich schlechter als für den zweiten Signalverlauf 34. Unter Signal-Rauschverhältnis ist das Verhältnis der vorhandenen mittleren Signalleistung zur vorhanden mittleren Rauschleistung zu verstehen. Es wird grundsätzlich ein möglichst hohes Signal-Rauchverhältnis angestrebt, um die Erkennbarkeit des Strichcodes 7 zu verbessern. Es wird folglich auch ein möglichst hoher Signalwertunterschied angestrebt. Daher ist eine Sättigung der Pixel der Sensorstufe 16 zu vermeiden.

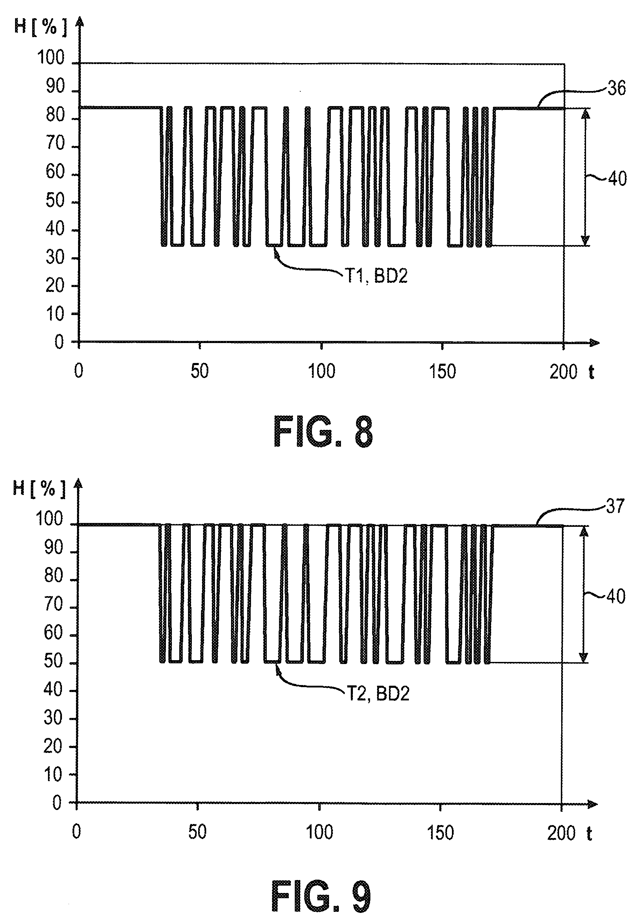

Ausgehend von dem in der Figur 6 dargestellten ersten Signalverlauf 33 ist der Effekt einer verlängerten Belichtungsdauer BD2 nun in der Figur 8 anhand eines vierten Signalverlaufs 36 veranschaulicht. Die Belichtungsdauer BD2 ist also größer als BD1. Die beiden Signalverläufe 33 und 36 sind bei gleicher Temperatur, nämlich der Ausgangstemperatur T1 aufgenommen. Im Unterschied zu dem ersten Signalverlauf 33 sind in dem vierten Signalverlauf 36 sowohl helle als auch dunkle Bereiche des Strichcodes 7 zu höheren Werten der Helligkeit H hin verschoben. Deutlich zu sehen ist ein dritter Signalwertunterschied 40, der nun ca. 50% der Helligkeit H ausmacht. Das Signal-Rauschverhältnis wird verbessert. Es wirkt sich also die Verlängerung der Belichtungsdauer positiv auf die Erkennbarkeit des Strichcodes aus. Gewünscht ist also eine derart lange Belichtungsdauer, dass gerade kein Sättigungseffekt eintritt.

Kommt nun zu der verlängerten Belichtungsdauer BD2 auch noch eine Temperaturerhöhung von T1 nach T2 hinzu, so wird der gesamte vierte Signalverlauf 36 nach oben verschoben und es ist ein fünfter Signalverlauf 37 erhalten, der in der Figur 9 visualisiert ist. Der fünfte Signalverlauf 37 weist den dritten Signalwertunterschied 40 auf. Die Figur 9 zeigt also die Wirkung einer verlängerten Belichtungsdauer BD2 und einer erhöhten Temperatur T2, jedoch ohne dass besagter Sättigungseffekt eintritt, was einem Idealzustand entspricht.

Gewünscht ist also, dass der maximal mögliche Signalwertunterschied möglichst vollständig ausgeschöpft wird, ohne dass eine Sättigung eintritt und dass dies auch bei sich verändernder Temperatur erzielt wird. Dabei kann es jedoch in Abhängigkeit von der jeweils vorliegenden Temperatur durchaus vorkommen, dass die Werte - auch der Starwert - für die Belichtungsdauer nicht weiter erhöht oder sogar reduziert werden müssen, um die Sättigung der Sensorstufe 16 zu vermeiden.

Durch das Berücksichtigen von gemerkten Werten für die Belichtungsdauer, welche Werte bei erfolgreichen Leseversuchen in der Vergangenheit gefunden wurden, und einer Berücksichtigung der Temperatur kann möglichst schnell ein passender Wert für die Belichtungsdauer bei einem Leseversuch gefunden werden und dadurch die Anzahl der Leseversuche in Abhängigkeit von den realen Umgebungs- bzw. Betriebesbedingungen entsprechend gering gehalten werden.

Da es sich bei dem vorhergehenden, detailliert beschriebenen Verfahren und dem Getränkegerät 1 um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Belichtungsstufe 13 in anderer Form als in der hier beschriebenen folgen. Es können organische LEDs oder einfach Glühlampen oder andere Beleuchtungsmittel zum Einsatz kommen. Ebenso kann das Verfahren zur Veränderung der Werte der Belichtungsdauer in einer anderen Form ausgestaltet werden. Das optische System kann durch eine Lochblende und/oder eine (oder mehrere) Linse(n) gebildet sein kann. Außerdem schließt die Verwendung der unbestimmten Artikel "ein" bzw. "eine" nicht aus, dass die betreffenden Merkmale auch mehrfach vorhanden sein können.

**Bezugszeichenliste**

| | | | |
|---|---|---|---|
| 1 | Getränkegerät | 26 | Startwert |
| 2 | Brühkammer | 27 | erster Wert |
| 3 | Lesefenster | 28 | zweiter Wert |
| 4 | Kapsel | 29 | dritter Wert |
| 5 | Kapselkörper | 30 | vierter Wert |
| 6 | Deckel | 31 | fünfter Wert |
| 7 | Strichcode | 32 | sechster Wert |
| 8 | Strichcodeleseeinrichtung | 33 | erster Signalverlauf |
| 9 | Baugruppe | 34 | zweiter Signalverlauf |
| 10 | Mikroschalter | 35 | dritter Signalverlauf |
| 11 | Startsignal | 36 | vierter Signalverlauf |
| 12 | erstes Steuersignal | 37 | fünfter Signalverlauf |
| 13 | Belichtungsstufe | 38 | erster Signalwertunterschied |
| 14 | Licht | 39 | zweiter Signalwertunterschied |
| 15 | Abbildungsstufe | 40 | dritter Signalwertunterschied |
| 16 | Sensorstufe | 41 | Datenbus |
| 17 | Strichcodesignal | W | Werte |
| 18 | Löschsignal | N | Anzahl der Lesefehler |
| 19 | Triggersignal | H | Helligkeit |
| 20 | Belichtungssteuerstufe | t | Zeit |
| 21 | Erkennungsfehlersignal | BD1 | erste Belichtungsdauer |
| 22 | Strichcodeerkennungsstufe | BD2 | zweite Belichtungsdauer |
| 23 | Temperatursensor | T1 | erste Temperatur |
| 24 | Temperatursignal | T2 | zweite Temperatur |
| 25 | Mikrokontroller | T3 | dritte Temperatur |

## Patentansprüche

1. Getränkegerät (1) zur Zubereitung eines Getränks mit
- einer Codeleseeinrichtung (8), die zum Lesen eines optisch lesbaren Codes (7) ausgebildet ist, und
- einer Sensorstufe (16) der Codeleseeinrichtung (8) zum opto-elektronischen Erfassen des Codes (7) während einer Belichtungsdauer, und
- einer Strichcodeerkennungsstufe (22), die zum Prüfen, ob der erfasste Code (7) erkannt wird, und
- zum Kommunizieren eines Erkennungsfehlers an eine Belichtungssteuerstufe (20) ausgebildet ist, wobei
- die Belichtungssteuerstufe (20) zum Festlegen eines Werts der Belichtungsdauer für die Sensorstufe (16) und als Folge des Auftretens eines ersten Erkennungsfehlers zum Verändern des Werts der Belichtungsdauer (27) bezogen auf einen Startwert (26) ausgebildet ist,
**dadurch gekennzeichnet, dass**
die Belichtungssteuerstufe (20) zum dahingehenden Verändern des Werts der Belichtungsdauer bezogen auf den Startwert (26) ausgebildet ist, dass als Folge des Auftretens weiterer Erkennungsfehler für benachbarte Erkennungsfehler abwechselnd größere Werte (29) und kleinere Werte (28, 30).als der Startwert (26) gewählt werden.

2. Getränkegerät (1) nach dem obigen Anspruch, **dadurch gekennzeichnet, dass** ein Absolutwert einer Differenz zwischen dem jeweiligen Wert (28, 29, 30) und dem Startwert (26) für benachbarte Erkennungsfehler sich vergrößert oder gleich bleibt.

3. Getränkegerät (1) nach einem der vorangehenden Ansprüche, **dadurch gekennzeichnet, dass** die Belichtungssteuerstufe (20) zum Berücksichtigen einer Lebenszeit des Getränkegeräts (1) dahingehend ausgebildet ist, dass der Startwert (26) in Abhängigkeit von der Lebenszeit erhöht wird.

4. Getränkegerät (1) nach einem der vorangehenden Ansprüche, **dadurch gekennzeichnet, dass** der Startwert (26) durch einen veränderlichen Startwert gebildet ist, der durch jenen Wert (30) oder eine statistische Größe mehrerer Werte der Belichtungsdauer gegeben ist, bei dem bzw. bei denen bei einem vorangehenden Lesen eines Codes kein Erkennungsfehler aufgetreten ist, und dass
die Belichtungssteuerstufe (20) bei jedem erstmaligen Lesen des Codes (7) den veränderlichen Startwert wählt.

5. Getränkegerät (1) nach einem der vorangehenden Ansprüche, **dadurch gekennzeichnet, dass** die Codeleseeinrichtung (8) einen Temperatursensor (23) zum Messen einer bei der Sensorstufe (16) vorliegenden Temperatur aufweist und dass die Belichtungssteuerstufe (20) zum Berücksichtigen der gemessenen Temperatur ausgebildet ist.

6. Getränkegerät (1) nach einem der vorangehenden Ansprüche, **dadurch gekennzeichnet, dass** der Code (7) ein Strichcode ist und die Codeleseeinrichtung (8) eine Strichcodeleseeinrichtung ist und die Strichcodeleseeinrichtung (8)
- eine Belichtungsstufe (13) aufweist, die zum Belichten des Strichcodes (7) ausgebildet ist, und
- die Sensorstufe (16) aufweist, die zum Erzeugen eines Strichcodesignals (17) ausgebildet ist, welches Strichcodesignal (17) eine Abbildung des belichteten Strichcodes (7) repräsentiert, und
- eine der Sensorstufe (16) im optischen Strahlengang vorangehend gelagerte Abbildungsstufe (15) aufweist, die zum Erzeugen der Abbildung des belichteten Strichcodes (7) für die Sensorstufe (16) ausgebildet ist, und die Strichcodeerkennungsstufe (22) aufweist, die unter Ausnutzung des Strichcodesignals (17) zum Erkennen des Strichcodes (7) und bei einem Auftreten eines Erkennungsfehlers zum Ansteuern der Belichtungssteuerstufe (20) ausgebildet ist.

7. Verfahren zum Lesen eines optisch lesbaren Codes (7),
- wobei ein Wert einer Belichtungsdauer festgelegt wird und der Code (7) während der Belichtungsdauer opto-elektronisch erfasst wird,
- wobei als Folge des Auftretens eines ersten Erkennungsfehlers der Wert der Belichtungsdauer bezogen auf einen Startwert (26) verändert wird,
**dadurch gekennzeichnet, dass**
der Wert der Belichtungsdauer (27) bezogen auf den Startwert (26) dahingehend verändert wird, dass als Folge des Auftretens weiterer Erkennungsfehler für benachbarte Erkennungsfehler abwechselnd größere Werte und kleinere Werte als der Startwert (26) gewählt werden.

8. Verfahren nach dem obigen Verfahrensanspruch, **dadurch gekennzeichnet, dass** sich ein Absolutwert einer Differenz zwischen dem jeweiligen Wert und dem Startwert (26) für benachbarte Erkennungsfehler vergrößert oder gleich bleibt.

## Claims

1. Beverage device (1) for preparing a beverage having
- a code reading device (8), which is embodied to read an optically readable code (7), and
- a sensor level (16) of the code reading device (8) for the opto-electronic detection of the code (7) during a period of exposure to light, and
- a barcode recognition level (22) which is embodied to check whether the detected code (7) is recognised, and
- to communicate a recognition error to an exposure control level (20), wherein
- the exposure control level (20) is embodied to define a value of the period of exposure to light for the sensor level (16) and as a result of the occurrence of a first recognition error to change the value of the period of exposure to light (27) based on a start value (26),
**characterised in that**
the exposure control level (20) is embodied so as to change the value of the period of exposure to light based on the start value (26), such that as a result of the occurrence of further recognition errors higher values (29) and lower values (28, 30) than the start value (26) are alternately selected for adjacent recognition errors.

2. Beverage device (1) according to the above claim, **characterised in that** an absolute value of a difference between the respective value (28, 29, 30) and the start value (26) increases or remains the same for adjacent recognition errors.

3. Beverage device (1) according to one of the preceding claims, **characterised in that** the exposure control level (20) is embodied so as to take a service life of the beverage device (1) into account such that the start value (26) is increased as a function of the service life.

4. Beverage device (1) according to one of the preceding claims, **characterised in that** the start value (26) is formed by a variable start value, which is provided by the value (30) or a statistical variable of a number of values of the period of exposure to light, in which no recognition error occurred during a preceding reading of a code, and that the exposure control level (20) selects the variable start value with each first reading of the code (7).

5. Beverage device (1) according to one of the preceding claims, **characterised in that** the code reading device (8) has a temperature sensor (23) for measuring a temperature at the sensor level (16) and that the exposure control level (20) is embodied to take the measured temperature into account.

6. Beverage device (1) according to one of the preceding claims, **characterised in that** the code (7) is a barcode and the code reading device (8) is a barcode reading device and the barcode reading device (8)
- has an exposure level (13) which is embodied to expose the barcode (7) to light, and
- has the sensor level (16), which is embodied to generate a barcode signal (17), which barcode signal (17) represents a mapping of the barcode (7) exposed to light, and
- has a mapping level (15) which is positioned upstream of the sensor level (16) in the optical beam path, which is embodied to generate the mapping of the barcode (7) exposed to light for the sensor level (16) and comprises the barcode recognition level (22), which using the barcode signal (17) is embodied to recognise the barcode (7), and if a recognition error occurs, is embodied to actuate the exposure control level (20).

7. Method for reading an optically readable code (7),
- wherein a value of a period of exposure to light is defined and the code (7) is detected optoelectronically during the period of exposure to light,
- wherein as a result of the occurrence of a first recognition error, the value of the period of exposure to light is changed based on a start value (26),
**characterised in that** the value of the period of exposure to light (27) based on the start value (26) is changed such that as a result of the occurrence of further recognition errors higher values and lower values than the start value (26) are alternately selected for adjacent recognition errors.

8. Method according to the above method claim, **characterised in that** an absolute value of a difference between the respective value and the start value (26) increases or remains the same for adjacent recognition errors.

## Revendications

1. Machine à boisson (1) pour la préparation d'une boisson comprenant
- un lecteur de code (8) conçu pour lire un code (7) lisible optiquement, et
- un étage détecteur (16) du lecteur de code (8) pour la détection optoélectronique du code (7) pendant une durée d'exposition, et
- un étage de reconnaissance de code-barres (22) conçu pour vérifier si le code (7) détecté est reconnu et
- pour communiquer une erreur de reconnaissance à un étage de contrôle d'exposition (20),
- l'étage de contrôle d'exposition (20) étant conçu pour fixer une valeur de la durée d'exposition pour l'étage détecteur (16) et, par suite de l'apparition d'une première erreur de reconnaissance, pour modifier la valeur de la durée d'exposition (27) par rapport à une valeur de démarrage (26),
**caractérisée en ce que**
l'étage de contrôle d'exposition (20) est conçu pour modifier la valeur de la durée d'exposition par rapport à la valeur de démarrage (26) dans ce sens que, par suite de l'apparition d'autres erreurs de reconnaissance, des valeurs plus grandes (29) et des valeurs plus petites (28, 30) que la valeur de démarrage (26) sont choisies alternativement pour les erreurs de reconnaissance voisines.

2. Machine à boisson (1) selon la revendication ci-dessus, **caractérisée en ce qu'**une valeur absolue d'une différence entre la valeur respective (28, 29, 30) et la valeur de démarrage (26) augmente ou reste la même pour les erreurs de reconnaissance voisines.

3. Machine à boisson (1) selon l'une des revendications précédentes, **caractérisée en ce que**, pour tenir compte d'une durée de vie de la machine à boisson (1), l'étage de contrôle d'exposition (20) est conçu pour augmenter la valeur de démarrage (26) en fonction de la durée de vie.

4. Machine à boisson (1) selon l'une des revendications précédentes, **caractérisée en ce que** la valeur de démarrage (26) est formée par une valeur de démarrage variable qui est donnée par la valeur (30), ou une grandeur statistique de plusieurs valeurs de la durée d'exposition, à laquelle aucune erreur de reconnaissance ne s'est produite lors d'une lecture précédente, et **en ce que**
l'étage de contrôle d'exposition (20) choisit la valeur de démarrage variable à chaque première lecture du code (7).

5. Machine à boisson (1) selon l'une des revendications précédentes, **caractérisée en ce que** le lecteur de code (8) comporte un capteur de température (23) servant à mesurer une température présente à l'étage détecteur (16) et **en ce que** l'étage de contrôle d'exposition (20) est conçu pour tenir compte de la température mesurée.

6. Machine à boisson (1) selon l'une des revendications précédentes, **caractérisée en ce que** le code (7) est un code-barres et le lecteur de code (8) est un lecteur de code-barres, et ledit lecteur de codes-barres (8) comporte :
- un étage d'exposition (13) conçu pour exposer le code-barres (7) à la lumière,
- l'étage détecteur (16) conçu pour générer un signal de code-barres (17), lequel signal de code-barres (17) représente une image du code-barres (7) exposé,
- un étage de formation d'image (15) monté dans la trajectoire du faisceau optique en amont de l'étage détecteur (16), conçu pour générer l'image du code-barres (7) exposé pour l'étage détecteur (16), et l'étage de reconnaissance de code-barres (22) conçu pour reconnaître le code-barres (7) en exploitant le signal de code-barres (17) et pour commander l'étage de contrôle d'exposition (20) lorsqu'une erreur de reconnaissance se produit.

7. Procédé pour lire un code (7) optiquement lisible,
- dans lequel une valeur d'une durée d'exposition est définie et le code (7) est détecté optoélectroniquement pendant la durée d'exposition,
- dans lequel, par suite de l'apparition d'une première erreur de reconnaissance, la valeur de la durée d'exposition est modifiée par rapport à une valeur de démarrage (26),
**caractérisé en ce que**
la valeur de la durée d'exposition (27) par rapport à la valeur de démarrage (26) est modifiée dans ce sens que, par suite de l'apparition d'autres erreurs de reconnaissance, des valeurs plus grandes et des valeurs plus petites que la valeur de démarrage (26) sont choisies alternativement pour les erreurs de reconnaissance voisines.

8. Procédé selon la revendication de procédé ci-dessus, **caractérisé en ce qu'**une valeur absolue d'une différence entre la valeur respective et la valeur de démarrage (26) augmente ou reste la même pour les erreurs de reconnaissance voisines.
